# EUROPÄISCHE PATENTSCHRIFT

(11) **EP 2 554 884 B1**
(45) Veröffentlichungstag und Bekanntmachung des Hinweises auf die Patenterteilung: **19.09.2018**
(21) Anmeldenummer: 12005303.8
(22) Anmeldetag: 19.07.2012
(51) Int. Cl.: F16L 3/08

(54) **Makierungselement und Markierungssystem**
Élément de marquage et système de marquage
Marking element and marking system

(30) Priorität: 30.07.2011 DE 102011109061
(43) Veröffentlichungstag der Anmeldung: 06.02.2013
(73) Patentinhaber: HYDAC Accessories GmbH, 66280 Sulzbach/Saar (DE)
(72) Erfinder: Scheibel, Jörg, 46242 Bottrop (DE); Hecker, Frank, 58739 Wickede/Ruhr (DE)
(74) Vertreter: Bartels und Partner, Patentanwälte

(56) Entgegenhaltungen:
- WO-A1-2010/111773
- DE-U1-202006 009 402
- DE-U1-202007 015 874
- GB-A- 2 468 412
- US-A1- 2009 078 322
- US-A1- 2009 120 350
- US-B1- 6 502 604

## Beschreibung

Die Erfindung betrifft ein Markierungselement gemäß den Merkmalen im Oberbegriff von Anspruch 1 sowie ein Markierungssystem mit mehreren solchen Markierungselementen.

Derartige Markierungselemente sind in Form einfacher Farbkappen zur Kennzeichnung von Kupplungen für Hydraulikschläuche im Neuzustand bekannt. Die bekannten Farbkappen gehen mitunter recht schnell verloren, was den Einsatz der Hydraulikschläuche und der zugeordneten Kupplungen, beispielsweise beim Ankuppeln von Landmaschinen an einen Schlepper, nicht nur arbeitsintensiv und zeitaufwendig, sondern auch fehleranfällig macht. Mitunter kann eine zweifelsfreie Zuordnung nicht mehr gewährleistet werden.

Aus der GB 2 468 412 A geht ein Markierungselement hervor, das mindestens eine bei an der Komponente festgelegtem Markierungselement erkennbare Markierung aufweist, wobei eine Innenwandung zur Anlage des Markierungselementes an der zu markierenden Komponente entsprechend einer an der zu markierenden Komponente vorgesehenen Anlagefläche ausgebildet ist, und wobei das Markierungselement aus einem farbigen Werkstoff hergestellt ist und eine in die Außenwandung des Markierungselementes eingeprägte, haptisch erkennbare Beschriftung ist.

Aus der US 2009/0078322 A1 geht ein hülsenförmiges Markierungselement hervor, das einen visuellen Indikator aufweist. Dazu sind auf der Außenseite des Markierungselements Einkerbungen vorgesehen.

In der US 2009/0120350 A1 ist an einem Verbindungselement ein aufgestecktes Markierungselement vorgesehen, das entsprechend geformt ist, um auf eine bestimmte Richtung hinzuweisen. Das Markierungselement ist auf dem Verbindungselement unverlierbar festgelegt.

Gemäß der WO 2010/111773 A1 ist ein hülsenförmiges Markierungselement vorgesehen, in das ein Pfeil zur Anzeige der Flussrichtung in Form einer Ausnehmung eingebracht ist. Die Ausnehmung kann durch eine fluoreszierende Beschichtung ausgefüllt sein.

Die US 6 502 604 B1 zeigt ein Markierungselement mit den Merkmalen im Oberbegriff von Anspruch 1 auf, welches unverlierbar an einer zu markierenden Komponente festlegbar ist und mindestens eine bei an der Komponente festgelegtem Markierungselement erkennbare Markierung aufweist, wobei eine Innenwandung zur Anlage des Markierungselements an der zu markierenden Komponente entsprechend einer an der zu markierenden Komponente vorgesehenen Anlagefläche ausgebildet ist und wobei mehrere in Axialrichtung verlaufende Rillen an der Innenwandung des Markierungselements vorgesehen sind.

Demgegenüber stellt sich die Erfindung die Aufgabe, eine dauerhafte und zuverlässige Kennzeichnung von in technischen Geräten eingesetzten Komponenten, wie Kupplungen für Hydraulikschläuche, zu gewährleisten.

Diese Aufgabe wird gelöst durch ein Markierungselement mit den Merkmalen von Patentanspruch 1 in seiner Gesamtheit. Vorteilhafte Ausgestaltungen des erfindungsgemäßen Markierungselements sind Gegenstände der Unteransprüche.

Gemäß dem Kennzeichen von Anspruch 1 ist vorgesehen, dass das Markierungselement als einstückiger, massiver Körper gebildet ist, dass die in Axialrichtung verlaufenden Rillen entlang einer Kreislinie gleichmäßig angeordnet sind und jeweils eine halbkreisförmige Querschnittsform aufweisen, und dass die jeweilige Markierung durch ein auf der Außenwandung des Markierungselements vorstehende, zumindest haptisch erkennbare Erhebung gebildet ist.

Das erfindungsgemäße Markierungselement zeichnet sich ferner dadurch aus, dass es unverlierbar an einer zu markierenden Komponente festlegbar ist und mindestens eine bei an der Komponente festgelegtem Markierungselement erkennbare Markierung aufweist.

Das erfindungsgemäße Markierungselement wird auf die zu markierende Komponente aufgesetzt, aufgesteckt, aufgebracht oder aufgepresst und verbleibt dort aufgrund der Verliersicherung dauerhaft. Verliersicher im Sinne der Erfindung meint, dass das Markierungselement bei bestimmungsgemäßem Gebrauch an der jeweiligen Komponente zumindest für eine bestimmte Zeit verbleibt, mit anderen Worten sich von dort nicht ohne weiteres Zutun löst, beispielsweise abfällt. Nach der bestimmten Zeit kann ein wieder lösbar an der Komponente festgelegtes Markierungselement abgenommen und bei Bedarf an dieser oder einer anderen Komponente erneut verliersicher festgelegt werden. Es versteht sich, dass das Markierungselement auch dauerhaft fest an der jeweiligen Komponente festgelegt sein kann.

Durch die jeweilige Markierung, welche von außen insbesondere für eine Bedienperson erkennbar ist, lässt sich die mit dem Markierungselement versehene Komponente eindeutig und dauerhaft markieren, anders ausgedrückt kennzeichnen. Die zu markierenden Komponenten sind beispielsweise Hydraulikverbinder, auf welche ein Markierungselement aufgeschoben wird, bevor der entsprechende Hydraulikschlauch verpresst wird.

Die mindestens eine Markierung ist optisch erkennbar ausgebildet. Hierbei kann das Markierungselement zumindest teilflächenweise farbig ausgebildet sein. Durch eine recht große zur Verfügung stehende Farbpalette lässt sich hierbei sehr individuell auch eine Vielzahl von Komponenten mit jeweils eindeutigen Markierungen versehen. Beispielsweise kann die Farbe einer Markierung entsprechend einem in einem Rohr- oder Schlauchsystem transportierten Medium, welches mit Hilfe des Markierungselements gekennzeichnet wird, gewählt werden, beispielsweise die Farbe Blau für Sauerstoff oder die Farbe Grün für Stickstoff.

Zweckmäßigerweise ist das Markierungselement aus einem farbigen Werkstoff hergestellt. Dies vereinfacht die Herstellung des erfindungsgemäßen Markierungselements, da während der Herstellung bzw. Fertigung sowohl die Form des Markierungselements zur Festlegung an einer jeweiligen Komponente als auch eine optische Markierung am Markierungselement ausgebildet werden.

Das erfindungsgemäße Markierungselement weist mindestens eine haptisch erkennbar ausgebildete Markierung auf. Dies ist insbesondere dann von Vorteil, wenn das Markierungselement oder die mit dem Markierungselement versehenen Komponente in einem vergleichsweise kleinen, von außen mitunter nicht vollständig einsehbaren Einbauraum eingesetzt wird. Eine haptisch erkennbare Markierung kann ertastet werden und ermöglicht eine eindeutige Zuordnung durch eine Bedienperson mittels Tasten, typischerweise über die Finger. Insbesondere bei einem Verschmutzen der Komponente mit daran festgelegtem Markierungselement ist eine eindeutige Zuordnung über ein Ertasten der Markierung weiter gewährleistet.

Die mindestens eine Flächenunregelmäßigkeit ist am Markierungselement an einer bei festgelegtem Markierungselement von außen zugänglichen Außenseite des Markierungselements angeordnet. Auf diese Weise lässt sich das Markierungselement mit der Markierung und folglich die markierte Komponente besonders leicht ertasten. Die jeweilige Flächenunregelmäßigkeit kann als Erhebung, Noppe, Ausnehmung, Mulde an der Außenseite des Markierungselements vorgesehen sein.

Zweckmäßigerweise sind mehrere Flächenunregelmäßigkeiten, bevorzugt in regelmäßiger Anordnung, am Markierungselement angeordnet. Hieraus ergibt sich der Vorteil, dass unabhängig von der jeweiligen Lage des Markierungselements und der mit dem Markierungselement versehenen Komponente diese ertastet werden können. Insbesondere bei sicherheitstechnisch relevanten Komponenten, welche beispielsweise am Transportweg eines Gefahrstoffes eingesetzt werden, ist eine zügige, möglichst störunanfällige Zuordnung der jeweiligen Komponenten unerlässlich.

Am Markierungselement kann eine Beschriftung vorgesehen sein. Die Beschriftung, welche insoweit eine optisch erkennbare Markierung ist, erleichtert einer Bedienperson den Einbau des Markierungselements an der jeweiligen Komponente und kann Informationen zur jeweiligen Markierung, zu Abmessungen und/oder zum Werkstoff des Markierungselements enthalten.

Weiter ist es vorteilhaft, dass das Markierungselement ringförmig zur Festlegung an einer Komponente eines Rohr- oder Schlauchsystems ausgebildet ist. Ein ringförmiges Markierungselement kann auf die jeweilige Komponente, wie einen Hydraulikverbinder, aufgeschoben werden. Besonders bevorzugt ist das Markierungselement hülsenartig mit einer vorgegebenen Erstreckung in Axialrichtung ausgebildet. Auf diese Weise wird eine Innenwandung zur Anlage an einer entsprechenden Festlegefläche der jeweiligen Komponente und weiter eine Außenwandung zur Aufnahme der mindestens einen Markierung ausgebildet. Ringförmige und hülsenartige Markierungselemente sind in einfacher Weise herstell-, lager- und transportierbar.

Bei einer vorteilhaften Ausgestaltung des erfindungsgemäßen Markierungselements ist die Innenwandung zur Anlage des Markierungselements an der zu markierenden Komponente entsprechend einer an der Komponente vorgesehenen Anlagefläche ausgebildet. So kann die Innenwandung eine rohrzylinderförmige Gestalt aufweisen. Es ist jedoch auch denkbar, eine Innenwandung über eine mehreckige Querschnittsform definierende Flächenabschnitte auszubilden.

An der Innenwandung des Markierungselements sind mehrere in Axialrichtung verlaufende Rillen in regelmäßiger Anordnung, vorgesehen. Die Axialrichtung entspricht einer Aufschieberichtung des Markierungselements auf die zu markierende Komponente. Durch die Rillen wird eine festsitzende, d.h., gegen Rotationsbewegungen gesicherte Lage des Markierungselements an der jeweiligen Komponente sichergestellt. Bei einer ebenfalls mit Rillen oder Rippen versehenen Anlagefläche der Komponenten kann ein Formschluss zwischen Markierungselement und Komponente ausgebildet werden.

Zum Einsatz im Außenbereich wird vorteilhafterweise ein stabiler, UV- und witterungsbeständiger Werkstoff, insbesondere ein Kunststoff, für das Markierungselement gewählt. Zweckmäßigerweise ist das Markierungselement aus einem Kunststoff, insbesondere Polypropylen, hergestellt. Ein derartiger Kunststoff kann entsprechend einer gewünschten Markierung mit Farbstoffen, insbesondere fluoreszierenden Stoffen, sowie Duftstoffen als Beimischung versetzt werden. Die Ausbildung von haptisch erkennbaren Markierungen ist in einem Kunststofffertigungsverfahren besonders einfach, da hier eine Flächenunregelmäßigkeit zur Darstellung eines Symbols, beispielsweise Minuszeichen, Pluszeichen oder Zeichen für ein chemisches Element, in einfacher Weise am Markierungselement ausgebildet werden kann.

Es versteht sich, dass am Markierungselement erfindungsgemäß unterschiedliche, d.h., optisch und haptisch erkennbare Markierungen und eine Mehrzahl von Markierungen vorgesehen sein kann. Das Markierungselement kann auswechselbar auf die Komponenten derart aufgesetzt werden, dass es in festgelegter Position unverlierbar, insbesondere festsitzend am Markierungselement positioniert ist, anforderungsabhängig jedoch von dort wieder entfernt werden kann. Ein Auswechseln der Markierungselemente ist insbesondere dann erforderlich, wenn eine Komponente in einer anderen Anwendung eingesetzt werden soll und die Markierung geändert werden muss.

Die Erfindung umfasst weiter ein Markierungssystem mit mehreren erfindungsgemäßen Markierungselementen, wobei jedes Markierungselement zur Markierung einer bestimmten Komponente vorgesehen ist. Beispielsweise können durch die Wahl verschiedener Markierungselemente unterschiedliche Hydraulikkreise markiert werden, wobei auch eine individuelle Abstimmung auf vorgegebene Farbkennzeichnungen, beispielsweise eines Zugfahrzeuges im landwirtschaftlichen Einsatz, möglich ist. Das Markierungssystem ermöglicht ein prozesssicheres und verwechselfreies Verbinden von Hydraulikleitungen, wodurch Beschädigungen von technischen Geräten durch fehlerhaften Anschluss weitestgehend vermieden werden.

Das erfindungsgemäße Markierungssystem kann unabhängig von den jeweiligen Komponenten vertrieben werden, insbesondere als Zusatz zu Standardkomponenten, und baukastenartig an die jeweilige Anwendung angepasst eingesetzt werden. Hierbei ist es vorstellbar, dass das Markierungssystem weiter eine entsprechende Markierungstafel, beispielsweise in Form eines Aufklebers zur Plazierung am Einsatzort, umfasst, was einer Bedienperson den Einsatz des Markierungssystems erleichtert.

Bei einer vorteilhaften Ausgestaltung des erfindungsgemäßen Markierungssystems sind die für die Markierungen an den Markierungselementen vorgegebene, insbesondere sicherheitsrelevante, Farben, Formen und/oder Symbole gewählt. Auf diese Weise wird sichergestellt, dass sich das erfindungsgemäße Markierungssystem unter Verwendung einer gängigen Nomenklatur vielfältig einsetzen lässt.

Weitere Vorteile und Merkmale der Erfindung ergeben sich aus den Figuren und der nachfolgenden Beschreibung der Zeichnung. Die oben beschriebenen und die weiter angeführten Merkmale können erfindungsgemäß jeweils einzeln oder in beliebigen Kombinationen an einem Markierungselement oder einem Markierungssystem ausgebildet sein. Die in den Figuren gezeigten Merkmale sind rein schematisch und nicht maßstäblich zu verstehen. Es zeigen:
- Fig. 1-4: unterschiedliche Darstellungen eines ersten Ausführungsbeispiels eines erfindungsgemäßen Markierungselements;
- Fig. 5: ein zweites Ausführungsbeispiel eines erfindungsgemäßen Markierungselements; und
- Fig. 6a-6d: ein erfindungsgemäßes Markierungssystem sowie dessen Festlegung an entsprechenden Komponenten.

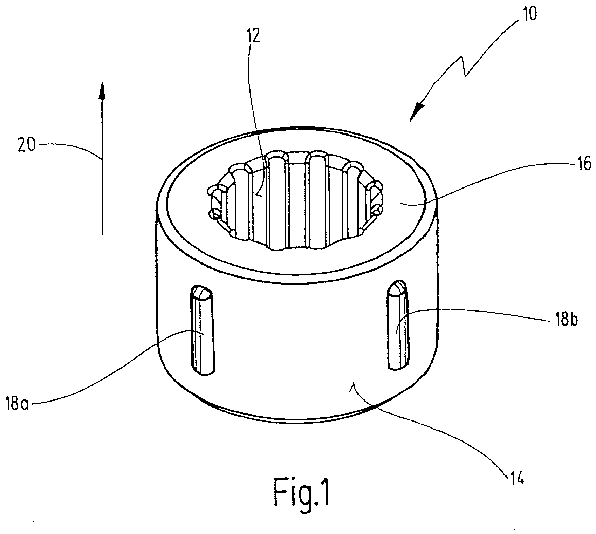

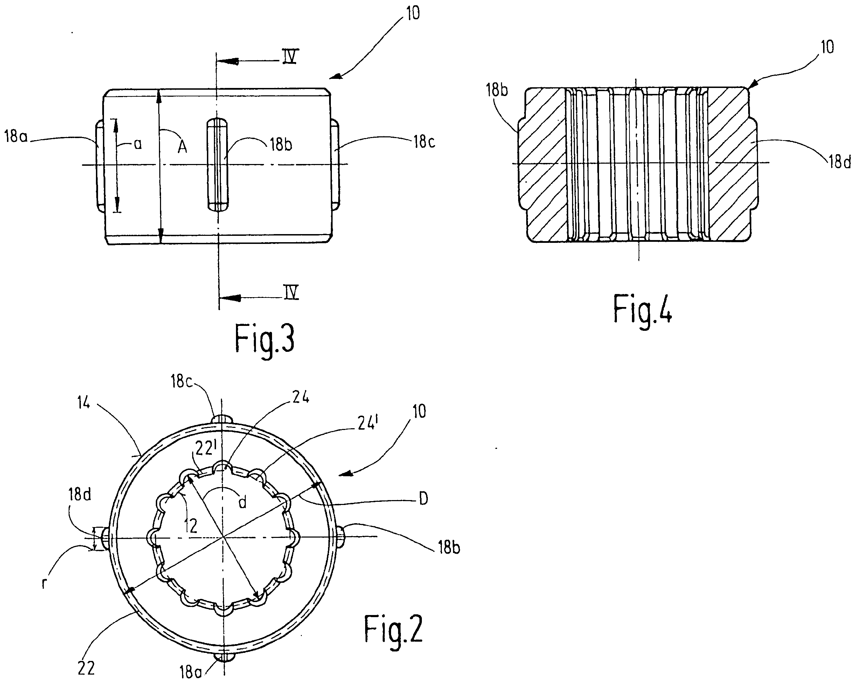

Fig. 1 zeigt ein rohrzylinderförmiges, hülsenartiges Markierungselement 10, welches innenliegend eine Innenwandung 12 und außenliegend eine Außenwandung 14 aufweist. An der Außenwandung 14 sind Flächenunregelmäßigkeiten 18a, 18b als sich in Axialrichtung 20 erstreckende Erhebungen ausgebildet. Durch die Flächenunregelmäßigkeiten 18a, 18b wird jeweils ein Minuszeichen ausgebildet. Auf einer Oberseite 16 des Markierungselements 10 kann eine Beschriftung (nicht gezeigt) vorgesehen sein, welche als Innendurchmesser d (Fig. 2) des Markierungselements 10 18mm und als Werkstoff für das Markierungselement 10 Polypropylen (PP) angibt.

In der in Fig. 2 gezeigten Draufsicht ist erkennbar, dass insgesamt vier Flächenunregelmäßigkeiten 18a, 18b, 18c, 18d an der Außenwandung 14 des Markierungselements 10 ausgebildet und dort entlang einer Kreislinie 22 gleichmäßig angeordnet sind. Ebenfalls entlang einer Kreislinie 22' gleichmäßig angeordnet sind in Axialrichtung 20 verlaufende Rillen 24, 24', welche an der Innenwandung 12 des Markierungselements 10 ausgebildet sind. Insgesamt sind zwölf Rillen 24, 24' mit jeweils halbkreisförmiger Querschnittsform ausgebildet. Der Außendurchmesser D des Markierungselements 10 beträgt beim gezeigten Ausführungsbeispiel 30mm und die radiale Erstreckung r der Flächenunregelmäßigkeiten 18a-18d jeweils 2,7mm.

In einer Seitenansicht nach Fig. 3 sind drei Flächenunregelmäßigkeiten 18a, 18b, 18c am Markierungselement 10 gezeigt. Die axiale Erstreckung A des Markierungselements 10 beträgt 12mm, die axiale Erstreckung a der Flächenunregelmäßigkeiten 18a-18c jeweils 12mm. Aus dem Schnitt entlang IV-IV aus Fig. 3 ist, wie in Fig. 4 gezeigt, erkennbar, dass das Markierungselement 10 ein einstückiger, massiver Körper ist. Das mit dem Minuszeichen als Symbol versehene Markierungselement 10 kann vollständig blau (RAL-Nr. 5015) eingefärbt sein. Alternative Farben sind Schwarz (RAL-Nr. 9004) und Grün (RAL-Nr. 6026).

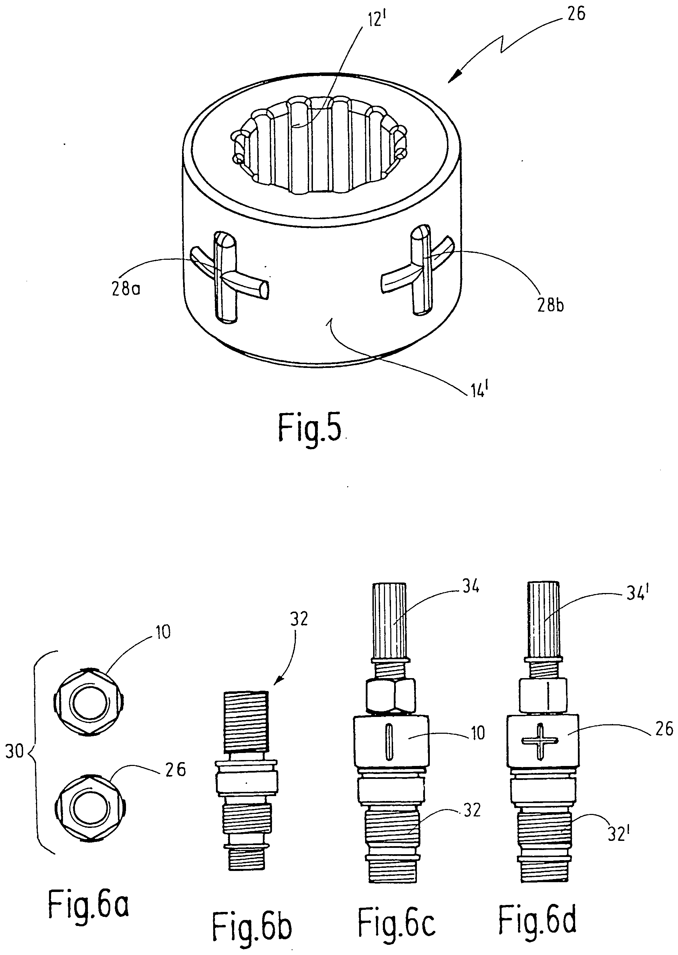

Fig. 5 zeigt ein weiteres Markierungselement 26, welches sich von dem Markierungselement 10 aus den Fig. 1-4 dadurch unterscheidet, dass anstelle von Minuszeichen weitere Flächenunregelmäßigkeiten 28a, 28b vorgesehen sind, welche jeweils als Erhebung ein Pluszeichen ausbilden. Das weitere Markierungselement 26 kann vollständig rot (RAL-Nr. 3018) eingefärbt sein. Durch die entsprechende Färbung und Symbolwahl kann das weitere Markierungselement 26, rot gefärbt und mit Pluszeichen versehen, einen Zulauf und das Markierungselement 10, blau gefärbt und mit Minuszeichen versehen, einen Ablauf und somit die Medienflussrichtung, wie eine Ölförderrichtung in einem Hydraulikkreislauf, angeben. Durch die Wahl verschiedener Farben können unterschiedliche Hydraulikkreise markiert werden. Das Design der Innenwandung 12, 12' des jeweiligen Markierungselements 10, 26 erlaubt eine feste Anbringung auf Schlauch- und Rohrverbindern (Fig. 6b).

Fig. 6a zeigt ein aus dem Markierungselement 10 und dem weiteren Markierungselement 26 zusammengesetztes Markierungssystem 30. Die Markierungselemente 10, 26 werden jeweils auf eine in Fig. 6b gezeigte Komponente 32 in Form eines Hydraulikverbinders aufgesetzt bzw. aufgesteckt. In Fig. 6c ist gezeigt, wie das Markierungselement 10 auf die Komponente 32 verliersicher aufgesetzt und die Komponente 32 mit einer weiteren Komponente 34 in Form eines Hydraulikschlauches verbunden ist. Entsprechend ist in Fig. 6d eine Komponente 32' mit dem weiteren Markierungselement 26 und einer weiteren Komponente 34' gezeigt. Das in Fig. 6a gezeigte Markierungssystem 30 ermöglicht eine eindeutige Markierung, mit anderen Worten Kennzeichnung, eines Hydraulikablaufs gemäß der Darstellung von Fig. 6c und eines Hydraulikzulaufs gemäß der Darstellung von Fig. 6d.

Anstelle einer zylinderförmigen Außenwandung 14, 14' können die Markierungselemente 10, 26 eine mehreckige Querschnittsform definierende Flächenabschnitte aufweisen, um dergestalt von einem Werkzeug, wie einem Schraubenschlüssel, ergriffen werden zu können. Es versteht sich, dass das in Fig. 6a beispielhaft gezeigte Markierungssystem 30 mehrere, insbesondere unterschiedlich ausgestaltete Markierungselemente 10, 26 unterschiedlicher Größe, Form, Markierungen, Werkstoffe aufweisen kann.

## Patentansprüche

1. Markierungselement (10, 26), welches unverlierbar an einer zu markierenden Komponente (32, 32') festlegbar ist und mindestens eine bei an der Komponente (32, 32') festgelegtem Markierungselement (10, 26) erkennbare Markierung aufweist, wobei eine Innenwandung (12) zur Anlage des Markierungselements (10, 26) an der zu markierenden Komponente (32, 32') entsprechend einer an der zu markierenden Komponente (32, 32') vorgesehenen Anlagefläche ausgebildet ist und wobei mehrere in Axialrichtung (20) verlaufende Rillen (24, 24') an der Innenwandung (12, 12') des Markierungselements (10, 26) vorgesehen sind, wobei das Markierungselement (10, 26) als einstückiger, massiver Körper gebildet ist, wobei die in Axialrichtung (20) verlaufenden Rillen (24, 24') entlang einer Kreislinie (22') gleichmäßig angeordnet sind und jeweils eine halbkreisförmige Querschnittsform aufweisen, und wobei die jeweilige Markierung durch ein auf der Außenwandung (14, 14') des Markierungselements (11) vorstehende, zumindest haptisch erkennbare Erhebung gebildet ist.

2. Markierungselement nach Anspruch 1, **dadurch gekennzeichnet, dass** das Markierungselement (10, 26) zumindest teilflächenweise farbig ausgebildet ist.

3. Markierungselement nach Anspruch 1 oder 2, **dadurch gekennzeichnet, dass** das Markierungselement (10, 26) aus einem farbigen Werkstoff hergestellt ist.

4. Markierungselement nach einem der vorhergehenden Ansprüche, **dadurch gekennzeichnet, dass** mehrere Flächenunregelmäßigkeiten (18a-18d, 28a-28b), bevorzugt in regelmäßiger Anordnung, am Markierungselement (10, 26) angeordnet sind.

5. Markierungselement nach einem der vorhergehenden Ansprüche, **dadurch gekennzeichnet, dass** am Markierungselement (10, 26) eine Beschriftung (20) vorgesehen ist.

6. Markierungselement nach einem der vorhergehenden Ansprüche, **dadurch gekennzeichnet, dass** das Markierungselement (10, 26) ringförmig zur Festlegung an einer Komponente (32, 32') eines Rohr- oder Schlauchsystems ausgebildet ist.

7. Markierungselement nach Anspruch 6, **dadurch gekennzeichnet, dass** das Markierungselement (10, 26) hülsenartig mit einer vorgegebenen Erstreckung in Axialrichtung (20) ausgebildet ist.

8. Markierungselement nach einem der vorhergehenden Ansprüche, **dadurch gekennzeichnet, dass** eine Innenwandung (12) zur Anlage des Markierungselements (10, 26) an der zu markierenden Komponente (32, 32') entsprechend einer an der zu markierenden Komponente (32, 32') vorgesehenen Anlagefläche ausgebildet ist.

9. Markierungselement nach einem der vorhergehenden Ansprüche, **dadurch gekennzeichnet, dass** das Markierungselement (10, 26) aus einem Kunststoff, insbesondere Polypropylen, hergestellt ist.

10. Markierungssystem (30) mit mehreren Markierungselementen (10, 26) nach einem der vorhergehenden Ansprüche, wobei jedes Markierungselement (10, 26) zur Markierung einer bestimmten Komponente (32, 32') vorgesehen ist.

11. Markierungssystem nach Anspruch 10, **dadurch gekennzeichnet, dass** für die Markierungen an den Markierungselementen (10, 26) vorgegebene, insbesondere sicherheitsrelevante, Farben, Formen und/ oder Symbole gewählt werden.

## Claims

1. A marking element (10, 26) which can be fixed in a captive manner to a component (32, 32') to be marked and has at least one recognisable marking on marking element (10, 26) fixed to component (32, 32'), wherein an inner wall (12) for installing the marking element (10, 26) on the component (32, 32') to be marked is formed corresponding to an installing surface provided on the component (32, 32') to be marked and wherein several grooves (24, 24') extending in the axial direction (20) are provided on the inner wall (12, 12') of the marking element (10, 26),
wherein the marking element (10, 26) is formed as an integral solid body,
wherein the grooves (24, 24') extending in the axial direction (20) are uniformly arranged along a circular line (22'), each having a semicircular cross-sectional shape, and
wherein the respective marking is formed by an at least haptically recognisable elevation projecting from the outer wall (14, 14') of the marking element (10).

2. A marking element according to claim 1, **characterised in that** the surface of the marking element (10, 26) is at least partially coloured.

3. A marking element according to Claim 1 or 2, **characterised in that** the marking element (10, 26) is made of a coloured material.

4. A marking element according to one of the preceding claims, **characterised in that** a plurality of surface irregularities (18a-18d, 288-280), preferably in a regular arrangement, are arranged on the marking element (10, 26).

5. A marking element according to one of the preceding claims, **characterised in that** an inscription is provided on the marking element (10, 26).

6. A marking element according to one of the preceding claims, **characterised in that** the marking element (10, 26) is of ring-shaped construction for fixing to a component (32, 32') of a pipe or hose system.

7. A marking element according to claim 6, **characterised in that** the marking element (10, 26) is of sleeve-like construction with a predetermined extension in the axial direction (20).

8. A marking element according to one of the preceding claims, **characterised in that** an inner wall (12) for installing the marking element (10, 26) on the component (32, 32') to be marked is formed in accordance with an installation surface provided on the component (32, 32') to be marked.

9. A marking element according to one of the preceding claims, **characterised in that** the marking element (10, 26) is made of a plastic, in particular polypropylene.

10. A marking system (30) comprising a plurality of marking elements (10, 26) according to any of the preceding claims, each marking element (10, 26) being provided for marking a particular component (32, 32').

11. A marking system according to claim 10, **characterised in that** predetermined, in particular safety-relevant, colours, shapes and/or symbols are selected for the markings on the marking elements (10, 26).

## Revendications

1. Elément (10, 26) de marquage, qui peut être fixé de manière imperdable à un composant (32, 32') à marquer et qui comporte au moins un marquage pouvant être reconnu sur l'élément (10, 26) de marquage fixe au composant (32, 32'), dans lequel une paroi (12) intérieure est constituée pour l'application de l'élément (10, 26) de marquage au composant (32, 32') à marquer de manière correspondante à une surface d'application prévue sur le composant (32, 32') à marquer, dans lequel une pluralité de rainures (24, 24') s'étendant en direction (20) axiale sont ménagées sur la paroi (12, 12') intérieure de l'élément (10, 26) de marquage, dans lequel l'élément (10, 26) de marquage est réalisé sous la forme d'un corps massif d'une seule pièce, dans lequel les rainures (24, 24') s'étendant en direction (20) axiale sont ménagées de manière régulière le long d'une ligne (22') circulaire et ont chacune une section transversale en forme de demi-cercle, et dans lequel chaque marquage respectif est réalisé sous la forme d'au moins une élévation faisant saillie de la paroi (14, 14') extérieure de l'élément (10) de marquage et pouvant être reconnue au moins au toucher.

2. Elément de marquage suivant la revendication 1, **caractérisé en ce que** l'élément (10, 26) de marquage est réalisé en couleur sur au moins une partie de la surface.

3. Elément de marquage suivant la revendication 1 ou 2, **caractérisé en ce que** l'élément (10, 26) de marquage est fabriqué en une matière colorée.

4. Elément de marquage suivant l'une des revendications précédentes, **caractérisé en ce que** plusieurs irrégularités de surface (18a-18d, 28a-28b) sont disposées sur l'élément (10, 26) de marquage, de préférence suivant un agencement régulier.

5. Elément de marquage suivant l'une des revendications précédentes, **caractérisé en ce qu'**il est prévu une inscription sur l'élément (10, 26) de marquage.

6. Elément de marquage suivant l'une des revendications précédentes, **caractérisé en ce que** l'élément (10, 26) de marquage est réalisé sous une forme annulaire pour fixation à un composant (32, 32') d'un système de tube ou de tuyau.

7. Elément de marquage suivant la revendication 6, **caractérisé en ce que** l'élément (10, 26) de marquage est réalisé à la manière d'une douille comportant une extension donnée à l'avance dans la direction (20) axiale.

8. Elément de marquage suivant l'une des revendications précédentes, **caractérisé en ce qu'**une paroi (12) intérieure est formée pour l'application de l'élément (10, 26) de marquage du composant (32, 32') à marquer en correspondance avec une surface d'application ménagée sur le composant (32, 32') à marquer.

9. Elément de marquage suivant l'une des revendications précédentes, **caractérisé en ce que** l'élément (10, 26) de marquage est fabriqué en une matière plastique, notamment en polypropylène.

10. Système (30) de marquage comportant une pluralité d'éléments (10, 26) de marquage suivant l'une des revendications précédentes, chaque élément (10, 26) de marquage étant prévu pour marquer un composant (32, 32') déterminé.

11. Système de marquage suivant la revendication 10, **caractérisé en ce que** l'on choisit pour les marquages sur les éléments (10, 26) de marquage, des couleurs, formes et/ou symboles déterminés à l'avance, notamment pertinents d'un point de vue de sécurité.
